Europäisches Patentamt

European Patent Office

Office européen des brevets

(11) Veröffentlichungsnummer: **0 040 788**
**A1**

(12) **EUROPÄISCHE PATENTANMELDUNG**

(21) Anmeldenummer: **81103823.1**

(22) Anmeldetag: **19.05.81**

(51) Int. Cl.³: **C 09 K 3/12**, B 32 B 27/12,
F 16 L 58/16, F 16 J 15/00

(30) Priorität: **28.05.80 DE 3020157**
**16.04.81 DE 3115487**

(43) Veröffentlichungstag der Anmeldung: **02.12.81**
**Patentblatt 81/48**

(84) Benannte Vertragsstaaten: **BE DE FR GB IT NL**

(71) Anmelder: **PAMPUS Vermögensverwaltungs-KG, Am Nordkanal 37-43, D-4156 Willich 3 (DE)**

(72) Erfinder: **Karsten, Werner, Kantstrasse 57, D-6500 Mainz (DE)**
Erfinder: **Schuster, Wilhelm, Fichardstrasse 49, D-6000 Frankfurt/Main (DE)**
Erfinder: **Robens, Erich, Schlesierstrasse 5, D-6382 Friedrichsdorf (DE)**

(74) Vertreter: **Teichmann, Eberhard, Dipl.-Ing., Am Nordkanal 37-43, D-4156 Willich 3 (DE)**

(54) **Dichtungsband für Rohrverschraubungen und Verfahren zu seiner Herstellung.**

(57) Gewindedichtungsbänder aus ungesintertem Polytetrafluoräthylen (PTFE) sind Stand der Technik. Die vorhandenen Nachteile einer zu geringen Formstabilität werden durch das neuartige Gewindedichtband behoben, das eine Vlies- oder Gewebeeinlage (2) besitzt, die durch eine ungesinterte Fluorpolymer-Folie (1) einseitig oder beidseitig abgedeckt wird. Eine zusätzliche Verbesserung des Herstellungsverfahrens wird durch eine einseitige oder beidseitige Beschichtung der Einlage mit einer Paste aus ungesintertem PTFE erreicht. Die PTFE-Folie (1) bzw. Paste ist in einem solchen Volumen vorhanden, daß nach dem Einpressen in die Faserzwischenräume noch eine überstehende Bedeckung der Fasereinlage vorhanden ist. Um eine bessere Anpassungsfähigkeit aufzuweisen, besitzt die Vlies- oder Gewebeeinlage eine Mindestdehnung, die durch nicht gegeneinander fixierte Fasern oder Faserstränge erreicht wird.

Dichtungsband für Rohrverschraubungen und Verfahren zu seiner Herstellung.

Die Erfindung betrifft ein Dichtungsband für Rohrverschrau. bungen, das im wesentlichen aus einer Folie aus Fluorpolymeren, insbesondere Polytetrafluoräthylen (PTFE) besteht, die mit Hilfe einer Fasereinlage verstärkt ist.

Dichtungsbänder aus vollständig fluorierten Polymeren, z.B. aus Polytetrafluoräthylen sind bekannt. Sie haben im Vergleich zu dem bisher üblichen Werg den Vorteil, das sie sich einfacher und sauberer verarbeiten lassen und das die Verbindung lösbar bleibt. Nachteilig ist jedoch, daß bereits bei geringem Zurückdrehen die Verbindung undicht werden kann, da der Werkstoff durch das Verschrauben, d.h. unter Druck- und Scherbeanspruchung seine Formstabilität einbüßt. Eine Verstärkung von Folien aus Fluorpolymeren durch Einarbeitung bekannter Füllmittel, wie Hanf-, Textil- oder Kunststoff-Fasern, führt nicht zu einer zufriedenstellenden Lösung, da die für Dichtungszwecke notwendige Eigenschaft des Werkstoffes, nämlich seine bleibende Dehnbarkeit, dadurch negativ beeinflußt wird und die Folienoberfläche wegen der geringen Adhäsion zu solchen Verstärkungsmaterialien mit diesen nicht einfach belegt werden kann.

Der vorliegenden Erfindung liegt daher die Aufgabe zugrunde, die mechanischen Eigenschaften eines Fluorpolymer-Dichtungsbandes zu verbessern, ohne dessen vorteilhafte Eigenschaften einzuschränken.

0040788

- 2 -

Das neuartige Dichtungsband soll ferner leicht zu handhaben und einfach herzustellen sein.

Es hat sich nun gezeigt, daß sich diese Aufgabe lösen läßt, wenn mindestens eine Oberfläche der Polytetrafluoräthylen-Folien mit einem Vlies- bzw. Gewebeband belegt ist, bzw. das Gewebeband mit einer PTFE-Paste gefüllt ist. Im einfachsten Fall wird ein Band aus Vlies oder Gewebe auf die bandförmige Folie aus ungesintertem Polytetrafluoräthylen gelegt und durch eine Druckbehandlung mit der Folie verbunden. Überraschender Weise hat sich herausgestellt, daß durch eine solche Zusammenpressung beide Materialien trotz der geringen Adhäsionsneigung des PTFE die erzielte Verbindung zwischen beiden Materialien für eine leichte Handhabung des resultierenden Produktes ausreichend ist. Vorzugsweise wird als Verstärkung ein Vliesstoff verwendet. Die Reißdehnung nach DIN 53 857 dieses Vliesstoffes sollte sowohl längs als auch quer mindestens 10 % betragen und die Fasern sollten in Längsrichtung des Bandes orientiert sein. Zur Erzielung guter Dichtungseigenschaften ist es erforderlich, die Banddicke der ungesinterten PTFE-Folie so zu wählen, daß unter Druckbelastung das Polymer-Volumen größer ist als das Volumen der Faserzwischenräume des Vlieses bzw. Gewebes, so daß die ungesinterte PTFE-Folie auch beim Zusammenpreßdruck nicht von den Faserzwischenräumen vollkommen aufgenommen werden kann, sondern noch ein Überstand von ungesintertem PTFE auf der Verstärkungseinlage verbleibt.

Gemäß einer weiteren Ausführungsform der Erfindung wird der Vliesstoff bzw. das Gewebe zwischen zwei Lagen ungesinterter PTFE-Folie gelegt. Es ist aber auch möglich,den Vliesstoff bzw. das Gewebeband in einem zusammengeklappten Folienstreifen, d.h. in einem einseitig offenen Folienschlauch einzulegen. Bei der nachfolgenden Zusammenpressung kann eine besondere Haftung zwischen beiden Materialien in verbesserter Weise erzielt werden, wenn man den        Preßvorgang zum Verbund Folie/Vlies bzw. Gewebe bei erhöhter Temperatur durchführt.

Eine weitere Verbesserung bei der Herstellung der neuen Gewindedichtbänder ist dadurch möglich, daß man nicht eine getrennt herstellte ungesinterte Polytetrafluoräthylen-Folie benutzt,sondern das Ausgangsmaterial für die Herstellung einer solchen Folie, nämlich eine Polytetrafluoräthylen-Paste direkt auf die Vlies- bzw. Gewebeeinlage aufträgt. Dadurch wird ein Arbeitsgang eingespart und ein wirtschaftlicheres Verfahren ermöglicht, wobei gleichzeitig eine sehr gut haftende PTFE-Beschichtung der Vlies- oder Gewebeeinlage erzielt wird.

Zur Durchführung dieses Vorganges wird das PTFE-Beschichtungsmaterial als Masse von etwa pastenförmiger Konsistenz mit Hilfe von geeigneten Auftragsvorrichtungen, z.B. durch Auftragskalander, auf die Vlies- oder Gewebeeinlage aufgebracht, eingepreßt und gleichzeitig bezüglich der Dicke der Beschichtung und des Gesamtproduktes kalibriert.

Aus Vorveröffentlichung ist das Herstellen von ungesinterten Folienbahnen aus Polytetrafluoräthylen-Pulver bereits bekannt. Nach der DE-AS 12 12 725 ist es Stand der Technik, PTFE-Folien sowohl aus einer Paste, die aus PTFE-Pulver und einer ölartigen Sustanz , als auch aus PTFE-Pulver und einer wässrigen Silikon-Harz-Emulsion besteht  herzustellen.

Bei der erfindungsgemäßen Lösung der Aufgabe wird jedoch das pastenförmige PTFE-Material unmittelbar auf die Verstärkungseinlage aufgebracht und so direkt eine Folie mit Verstärkungseinlage aus einem Faservlies oder Gewebe hergestellt. Bei Dichtbändern für Rohrverschraubung ist es nämlich wichtig, das die Bedingungen der DIN 30 660 erfüllt werden, d.h. daß das Band sowohl für Trinkwasser, Heißwasser von Heizungssystemen und Allgas verwendbar ist. Dafür ist es erforderlich, daß das Dichtungsband keine Stoffe oder Reste von Stoffen enthält, die durch Trinkwasser oder Heißwasser ausgelaugt werden. Das Dichtungsband und seine Fasereinlage muß weiter verrottungsfest gegen Wasser und gegen Abscheidungen aus technischen Gasen sein. Die Anforderung an ein Gewindedichtband bedingen ferner, daß es für die Umwicklung und Abdichtung bei der Verschraubung genügend reißfest ist und eine ausreichende Dehnung zur Anpassung an das Verschraubungsgewinde besizt.

Erfindungsgemäß wird deshalb bevorzugt ein Faservlies mit nicht gegeneinander fixierten Fasern mit einer PTFE-Paste beschichtet.

Diese Paste besteht aus einem Gemisch von PTFE-Pulver und wässriger PTFE-Dispersion. Es stellte sich überraschenderweise heraus, daß trotz des PTFE-Dispersionsanteils, der in herkömmlicher Weise ohne Sinterung nicht zu wasserunempfindlichen Überzügen auf Fasern führt, die erfindungsgemäße Beschichtung aus dem genannten Gemisch nicht wasserempfindlich ist. Das kann dadurch erklärt werden, daß die Zusammensetzung der Beschichtungsmasse so gewählt wird, daß die PTFE-Pulverteilchen gegenüber den PTFE-Dispersionsteilchen im Überschuß vorliegen und die wasseraffinen Dispersionsteilchen einhüllen. Das PTFE-Pastengemisch gemäß der Erfindung besteht beispielsweise aus einem Gemisch von 36,4 Gew.-% PTFE-Pulver und 63,6 Gew.-% einer wässrigen PTFE-Dispersion mit 31, 5 %
Feststoffanteil. Zur Herstellung der pastösen Beschichtungsmasse
wird die Dispersion durch Rühren homogenisiert und anschließend
das PTFE-Pulver langsam zugesetzt, bis die Mischung nach einer
weiteren Rührzeit von etwa 10 Minuten in einem pastösen Zusand
fertig vorliegt.

Diese pastöse Beschichtungsmasse wird dann in üblicher Weise
auf die Faser-Verstärkungseinlage in einer Menge aufgebracht,
daß ein Überschuß von PTFE-Masse vorhanden ist. Das Aufbringen
auf das Faservlies kann sowohl einseitig als auch beidseitig erfolgen. Das so beschichtete Faservlies bzw. Gewebe wird anschliessend getrocknet und in Vorrichtungen nach dem Stand der Technik zu
etwa 1 cm breiten Gewindedichtungsbändern zerschnitten, die üblicherweise in Rollenform in den Handel kommen.

Es ist zusätzlich möglich, bei einseitiger Beschichtung des Faservlieses oder Gewebes die unbeschichtete Seite, die zwar in den
Poren mit der PTFE-Masse gefüllt ist, jedoch noch benetzbare
Fasern an der Oberfläche in genügender Anzahl aufweist, mit einem
Kunststoff-Kleber zu beschichten, um eine zusätzliche Haftung des
Bandes beim Umwickeln der abzudichtenden Rohrverschraubung zu erreichen. Es ist selbstverständlich, daß ein solcher Kunststoff-
Kleber ebenfalls den sonstigen Anforderungen an ein Gewindedichtmaterial nach DIN 30 660 entsprechen muß.

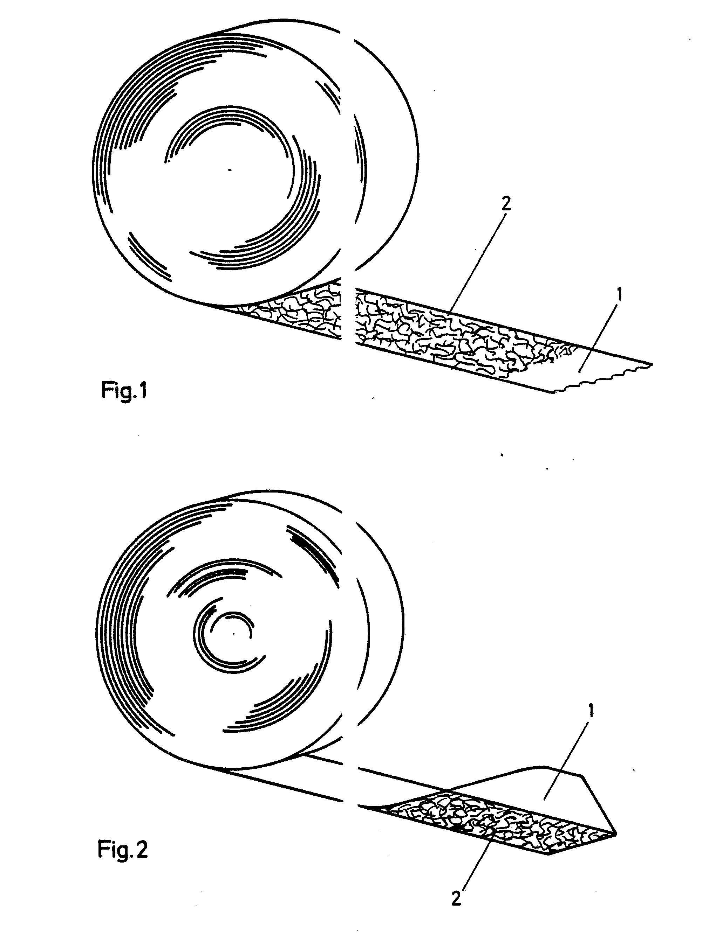

Die Erfindung wird in den beiliegenden Zeichnungen 1 und 2
schematisch dargestellt.
Gemäß der in Fig. 1 dargestellten Ausführungsform wird eine Fluorpolymer-Folie (1) aus ungesinterten Polytetrafluoräthylen einseitig mit einem Band (2) aus Vlies oder Gewebe belegt.

Fig 2 zeigt, daß das Vliesband (2) sich zwischen beiden Schenkeln einer zusammenklappenden Fluorpolymer-Folie (1) befindet.

PATENTANSPRÜCHE

1. Dichtungsband für Rohrverschraubungen bestehend im wesentlichen aus einer Folie aus ungesinterten Fluorpolymeren, insbesondere Polytetrafluoräthylen, dadurch gekennzeichnet, daß mindestens eine Oberfläche der Fluorpolymerfolie mit einer Verstärkungseinlage aus einem Vlies- bzw. Gewebeband belegt ist.

2. Dichtungsband nach Anspruch 1 dadurch gekennzeichnet, daß das Fluorpolymer-Volumen so bemessen ist, daß es unter Druckbelastung von den Faserzwischenräumen des Vlieses bzw. Gewebes nicht aufgenommen werden kann.

3. Dichtungsband nach Anspruch 1 oder 2 dadurch gekennzeichnet, daß die Reißdehnung des Vliesstoffes sowohl längs als auch quer mindestens 10 % beträgt und die Fasern in Längsrichtung des Bandes orientiert sind.

4. Dichtungsband nach einem der Ansprüche 1 - 3 dadurch gekennzeichnet, daß es aus zwei Lagen Fluorpolymer-Folie, vorzugsweise in Form eines einseitig offenen Folienschlauches besteht, zwischen denen sich das Vlies bzw. Gewebeband befindet.

5. Dichtungsband nach einem der Ansprüche 1 - 4 dadurch gekennzeichnet, daß das Vlies- bzw. Gewebeband und die Fluorpolymerfolie unter erhöhter Temperatur zusammengepreßt worden sind.

6. Verfahren zur Herstellung von Dichtungsband für Rohrverschraubungen bestehend aus einer Folie von ungesintertem Polytetrafluoräthylen, die durch eine Vlies- oder Gewebeeinlage verstärkt ist, dadurch gekennzeichnet, daß das Polytetrafluoräthylen in Form einer Paste auf die Vlies- bzw. Gewebeeinlage aufgebracht, eingepreßt und anschließend zusammen mit der Einlage kalibriert wird.

7. Verfahren zur Herstellung von Dichtungsband nach Anspruch 6 dadurch gekennzeichnet, daß die PTFE-Beschichtungspaste aus einer Mischung von PTFE-Pulver und einer wässrigen Dispersion besteht.

8. Dichtungsband nach den Ansprüchen 6 oder 7 dadurch gekennzeichnet, daß die PTFE-Beschichtungspaste einseitig oder beidseitig auf die Fasereinlage aufgebracht ist.

9. Dichtungsband nach einem der Ansprüche 1 - 8 dadurch gekennzeichnet, daß die Vlies- oder Gewebeeinlage keine gegeneinander fixierten Fasern oder Faserstränge besitzt.

10. Dichtungsband nach einem der Ansprüche 1 - 9 dadurch gekennzeichnet, daß eine einseitig mit ungesinterter PTFE-Folie oder mit PTFE-Paste beschichtete Vlies- oder Gewebeeinlage auf der Gegenseite mit einem Kunststoff-Kleber beschichtet ist.

0040788

Fig.1

Fig.2

| Kategorie | EINSCHLÄGIGE DOKUMENTE | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | DE - C - 1 010 216 (E.I. DU PONT DE NEMOURS & COMPANY) <br> * Spalte 1, Zeile 34 - Spalte 3, Zeile 37; Patentansprüche 1-4 * <br> -- | 1,2,5, 6,7 | C 09 K 3/12 <br> B 32 B 27/12 <br> F 16 L 58/16 <br> F 16 J 15/00 |
| | DE - A1 - 2 918 923 (SOLVAY & CIE) <br> * Gesamt * <br> -- | 1,5 | |
| | DE - A1 - 2 818 385 (DYNAMIT NOBEL AG) <br> * Gesamt * <br> -- | 1,5 | **RECHERCHIERTE SACHGEBIETE (Int. Cl.³)** |
| A | DE - A1 - 2 343 488 (DENSO-CHEMIE WEDEKIND KG) <br> * Gesamt * <br> -- | 1 | C 09 K 3/00 <br> B 32 B 27/00 <br> F 16 L 58/00 <br> F 16 J 15/00 |
| | Seachtling-Zebrowski "KUNSTSTOFF-TASCHENBUCH", 19. Ausgabe 1974, CARL HANSER VERLAG, München Wien <br> * Seiten 284,285,355 <br> ---- | 1,5, 6,10 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 04-08-1981 | SCHUGANICH |

EPA form 1503.1  06.78